Europäisches Patentamt

European Patent Office

Office européen des brevets

(11) Publication number: **0 335 546**
**A2**

# EUROPEAN PATENT APPLICATION

(21) Application number: **89302720.1**

(22) Date of filing: **20.03.89**

(51) Int. Cl.⁴: **G11B 21/08 , //G11B5/55**

(30) Priority: **28.03.88 US 173970**

(43) Date of publication of application:
**04.10.89 Bulletin 89/40**

(84) Designated Contracting States:
**DE FR GB**

(71) Applicant: **RIGIDYNE CORPORATION**
**2655 Park Center Drive**
**Simi Valley California 93065(US)**

(72) Inventor: **Volz, LeRoy Allen**
**11922 Doral Avenue**
**Northridge California 91326(US)**
Inventor: **Nissimov, Haim**
**24526 Heavenly Court**
**West Hills California 91307(US)**

(74) Representative: **Caro, William Egerton et al**
**J. MILLER & CO. Lincoln House 296-302 High**
**Holborn**
**London WC1V 7JH(GB)**

(54) **Off-set nulling system and method for computer disk drives.**

(57) An off-set nulling system for detecting and compensating for position off-set error of a head (12) relative to a centre line (23) of a designated track (24) on the surface of a memory storage disk (14) having a plurality of generally concentric tracks, the head being movable through a seek step during a normal operation mode for alignment with the designated track (24), comprises: calibration mode means for detecting and compensating for position off-set errors during a calibration mode at selected tracks located respectively at radially inner and radially outer regions on the disk surface; and operation mode means responsive to the specific location of the designated track (24) on the disk (14) and the position off-set errors detected by the calibration means for interpolating the position off-set errors to apply an interpolated off-set to the head for compensation of position off-set error at the designated track.

FIG. 5

## OFF-SET NULLING SYSTEM AND METHOD FOR COMPUTER DISK DRIVES

This invention relates to off-set nulling systems and methods for computer disk drives for controlling the position of one or more actuator heads with respect to one or more associated memory storage disks or the like, for purposes of accurately reading and/or writing data within closely spaced tracks on the disk surfaces. More particularly, although not so restricted, this invention relates to an improved and simplified control system for automatic compensation of head position off-set errors of the type generally attributable to DC off-sets of the disk drive control circuitry.

In recent years, micro-computer equipment particularly such as so-called personal and desk top computers have become extremely popular for a wide variety of business, educational, recreational and other uses. Such computers commonly include a main central processor unit having one or more memory storage disks for the storage of data. In many modern computers, the storage disk or disks are provided as part of a Winchester-type disk drive unit, sometimes referred to as a "hard" disk, wherein the storage disks are supported on a rotatable spindle within a substantially sealed housing. The disks are rotatably driven in unison by a small spindle motor, and one or more electro-magnetic heads are displaced by a head actuator assembly to traverse surfaces of the rotating disks for purposes of reading and writing data. Such Winchester-type disk drive units are generally preferred in comparison with so-called floppy disk drives due to their high memory storage capacities and faster operating speeds.

For a typical Winchester-type disk drive, data is recorded onto magnetisable surfaces or surface films on the memory storage disks in the form of data bits adapted to be encoded and de-coded in binary form. The data is recorded within the confines of narrow concentric tracks defined on the disk surfaces with track densities in the range of about 500 to 1,000 and more tracks per inch (200 to 400 tracks per centimetre) being relatively well known. Accordingly, for any selected disk drive unit, the total memory storage capacity is directly proportional to the number of available data tracks.

In normal operation of a disk drive unit, a system controller is provided for identifying the location of data which has been stored by recording upon the storage disks, typically through the use of directory name, file name, and/or track address information. When reading of the data at a specific data track is desired, the system controller signals the head actuator assembly to displace the heads to the desired position. Alternatively, when data recording or writing is desired, the system controller operates through the actuator assembly to move the heads in a manner aligning one head with a vacant data track.

For optimum data recording and subsequent retrieval, it is necessary for the heads to be positioned in substantially centered and accurate tracking alignment with respect to any selected one of the closely spaced data tracks. In this regard, the disk drive unit normally includes a servo system having means for detecting servo data bits which are pre-recorded onto one or more of the storage disks. The servo system responds to detection of the servo data to adjust the actual head position for obtaining optimum centered head alignment with a selected track.

Whilst available servo systems function generally satisfactorily for most operating conditions, such servo systems have not provided a simple and economic way to compensate for so-called position off-set errors attributable to DC off-sets of the disk drive circuitry. That is, the actual head position as controlled by the actuator assembly is subject to a variety of electronic and mechanical error factors, such as track length, cable bias, temperature, bearing friction, etc., all of which can result in head position off-set errors of a magnitude which varies across the radial span of the disk or disks. Servo system detection and response to pre-recorded servo data does not adequately compensate for such position off-set errors during all operating conditions of the disk drive.

There exists, therefore, a significant need for a relatively simple, cost efficient, and reliable system and method for off-setting or nulling DC position off-set errors in a computer disk drive or the like. The present invention seeks to fulfil these needs and to provide further related advantages.

According to one aspect of the present invention, there is provided an off-set nulling system for detecting and compensating for position off-set error of a head relative to a centre line of a designated track on the surface of a memory storage disk having a plurality of generally concentric tracks, said head being movable through a seek step during a normal operation mode for alignment with the designated track, said nulling system being characterised by comprising: calibration mode means for detecting and compensating for position off-set errors during a calibration mode at selected tracks located respectively at radially inner and radially outer regions of the disk surface; an operation mode means responsive to the specific location of the designated track on the disk and the position off-set errors detected by said calibration means for interpolating said position off-set errors to apply an interpolated off-set to the head for compensation of position off-set error at the designated track.

Preferably said calibration mode means includes means for detecting the direction of position off-set error when the head is generally aligned with one of said selected tracks, means for displacing said head incrementally towards a position eliminating the position off-set error and re-determining means for re-determining the direction of the position off-set error at the conclusion of each increment of head displacement, the position off-set error being substantially eliminated when said re-determining means detects a change of direction in the position off-set error.

Said calibration mode means may further include record means for storing an off-set compensation signal for each of said selected tracks during said calibration mode, and for applying said off-set compensation signal to the head prior to detecting the direction of the position off-set error by said detecting means, and up-date means for up-dating said off-set compensation error signal in accordance with actual position off-set error during said calibration mode.

Said record means may store said off-set compensation signal for application to the head during a subsequent calibration mode.

In one embodiment the concentric tracks on the disk surface comprise a quadrature track configuration including different track types in repeating groups of four across the radial span of the disk surface, said calibration mode means, in operation, detecting and compensating for position off-set errors for a first group of all four track types located generally at a radially inner region of the disk surface, and for position off-set errors for a second group of all four track types located generally at a radially outer region of the disk surface, and said operation mode means, in operation, being responsive to the specific location and track type of the designated track and the position off-set errors detected by said calibration mode means for that track type.

According to another aspect of the present invention, there is provided an off-set nulling system for detecting and compensating for position off-set error of a head relative to a centre line of a designated track on the surface of a memory storage disk having a plurality of generally concentric tracks, said head being movable through a seek step during a normal operation mode for alignment with the designated track, said nulling system being characterised by comprising: calibration mode means for detecting and compensating for the position off-set errors during a calibration mode at at least two selected tracks located at spaced positions across the radial span of the disk surface; and operation mode means responsive to the specific location of the designated track on the disk and the position off-set errors detected by said calibration means for interpolating said position off-set error to apply an interpolated off-set to the head for compensation of position off-set error at the designated track.

According to a further aspect of the present invention there is provided an off-set nulling system for detecting and compensating for position off-set error of a head relative to a centre line of a designated track on the surface of a memory storage disk having a plurality of generally concentric tracks, said head being movable through a seek step during a normal operation mode for alignment with the designated track, said nulling system being characterised by comprising: calibration mode means including means for aligning the head with at least one selected track located generally at a radially inner region of the disk surface, means for detecting the direction of position off-set error, means for displacing the head in incremental steps towards a position substantially eliminating the position off-set error, and means for re-determining the direction of the position off-set error at the conclusion of each incremental step, the position off-set error being substantially eliminated when said re-determining means detects a change of direction of the position off-set error; and operation mode means responsive to the specific location of the designated track at the radially inner and outer regions thereof and the position off-set errors therefor detected by said calibration mode means, for interpolating said position off-set errors to apply an interpolated off-set to the head for compensation of position off-set error at the designated track.

Advantageously, the disk surface is sub-divided into a selected number of track zones, said operation mode means including means for identifying the zone of said designated track, and for interpolating the position off-set errors detected during said calibration mode in accordance with the identified zone of the designated track to apply an interpolated off-set to the head.

According to a yet further aspect of the present invention there is provided an off-set nulling method for compensation of position off-set errors of a head relative to a centre line of a designated track on the surface of a memory storage disk having a plurality of generally concentric tracks, said method being characterised by comprising the steps of: detecting and compensating for position off-set errors during a calibration mode at selected tracks located respectively at radially inner and radially outer regions on the disk surface; displacing the head through a seek step for general alignment with a designated track on the disk surface during a normal operation mode; identifying the specific location of the designated track on the disk surface; interpolating the position off-set errors detected during the calibration mode in accordance with the location of the designated track to a obtain an interpolated off-set signal; and adjusting the position of the head in accordance with the interpolated off-set signal.

Said detecting and compensating step during the calibration mode may comprise detecting the direction of position off-set error when the head is generally aligned with one of said selected tracks, displacing said head incrementally towards a position eliminating the position off-set error and re-determining the direction of the position off-set error at the conclusion of each increment of head displacement, the position off-set error being substantially eliminated when the direction of the position off-set error changes.

The method preferably includes the steps of storing an off-set compensation signal for each of said selected tracks during said calibration mode, and applying the stored off-set compensation signal to the head prior to detecting the direction of the position off-set error and up-dating said off-set compensation error signal in accordance with actual position off-set error during said calibration mode.

The method may include the step of storing the off-set compensation signal for application to the head during a subsequent calibration mode.

According to yet another aspect of the present invention there is provided an off-set nulling method for compensation of position off-set errors of a head relative to a centre line of a designated track on the surface of a memory storage disk having a plurality of generally concentric tracks, said method being characterised by comprising the steps of: detecting and compensating for position off-set errors during a calibration mode at at least two selected tracks located at spaced position across the radial span of the disk surface; displacing the head through a seek step for general alignment with the designated track on the disk surface during a normal operation mode; identifying the specific location of the designated track on the disk surface; interpolating the position off-set errors detected during the calibration mode in accordance with the location of the designated track to obtain an interpolated off-set signal; and adjusting the position of the head in accordance with the interpolated off-set signal.

According to a still yet further aspect of the present invention there is provided an off-set nulling method for compensation of position off-set errors of a head relative to a centre line of a designated track on the surface of a memory storage disk having a plurality of generally concentric tracks, said method being characterised by comprising the steps of: a calibration mode step including aligning the head with at least one selected track located generally at a radially inner region of the disk surface detecting the direction of position off-set error, displacing the head in incremental steps towards a position substantially eliminating the position off-set error, re-determining the direction of the position off-set error at the conclusion of each incremental step, and halting said incremental stepping when change of direction in the position off-set error occurs; displacing the head through a seek step for general alignment with a designated track on the disk surface during a normal operation mode; identifying the specific location of the designated track on the disk surface; interpolating the position off-set errors detected during the calibration mode in accordance with the location of the designated track to obtain an interpolated off-set signal; and adjusting the position of the head in accordance with the interpolated off-set signal.

Concentric tracks on the disk surface preferably comprise a quadrature track configuration including different track types in repeating groups of four across the radial span of the disk surface, said detecting and compensating step being repeated for a first group of all four tracks types located generally at a radially inner region of the disk surface, and for a second group of all four track types located generally at a radially outer region of the disk surface, and said interpolating step including responding to the specific location and track type of the designated track and the position off-set errors detected by said calibration mode means for that track type.

Said interpolating step preferably comprises sub-dividing the disk surface into a selected number of track zones, identifying the zone and the track type of the designated track, and interpolating the position off-set errors for that track type as detected during said calibration mode in accordance with the identified zone.

The invention is illustrated, merely by way of example, in the accompanying drawings, in which:-

Figure 1 is a somewhat schematic diagram illustrating a typical memory storage disk of a computer disk drive in association with a head for use in reading and/or writing data;

Figure 2 is an enlarged schematic representation illustrating head position relative to multiple track types on the disk as used, for example, in a conventional quadrature track configuration;

Figure 3 is a further enlarged and developed schematic diagram depicting head position off-set error relative to a single track on the disk;

Figure 4 is a graphic representation of typical position off-set error in a computer disk drive, as a function of track address on the disk;

Figure 5 is a flow chart depicting a method for identifying and compensating for position off-set errors during a calibration mode;

Figure 6 is a flow chart illustrating a sub-routine for identifying and compensating for position off-set error, for use in the calibration mode as depicted in Figure 5;

Figure 7 is a flow chart illustrating a sub-routine for use in determining off-set error direction, for use in the calibration mode as depicted in Figure 5;

Figure 8 is a schematic circuit diagram illustrating a comparator circuit for determining off-set error direction; and

Figure 9 is a flow chart depicting a method for applying an interpolated off-set compensation factor during a normal operation mode.

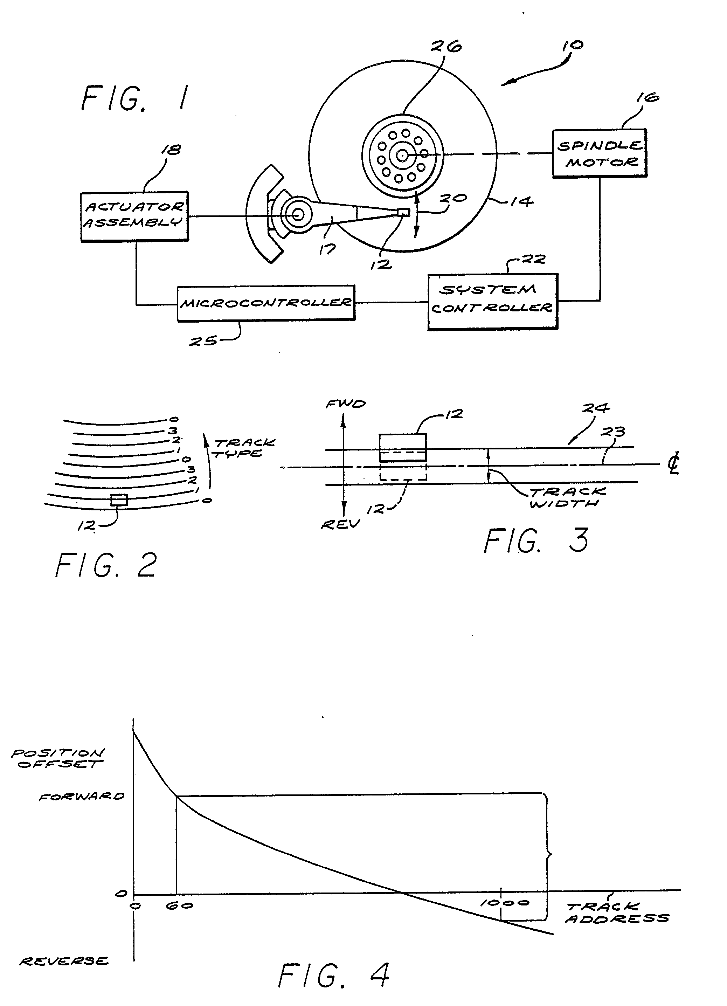

As shown in the drawings, an off-set nulling system according to the present invention is provided for compensation of position off-set errors in a computer disk drive referred to generally in Figure 1 by the reference numeral 10, of the type used in micro-computers such as personal and desk top computers and the like. The off-set nulling system is designed to provide a relatively simple and economical apparatus and method for maintaining an electro-magnetic head 12 in accurate centered alignment with a selected annular track or cylinder on a memory storage disk 14 for accurate reading and/or writing of data.

As shown schematically in Figure 1, the computer disk drive 10 includes at least one memory storage disk 14 mounted for rotation about a central axis thereof in response to operation of a spindle motor 16. The disk 14 includes a magnetisable surface film on at least one and preferably both sides thereof, wherein this film is adapted to record and store data in the form of binary data bits arranged in closely spaced concentric tracks. The electro-magnetic head 12 is carried by an arm 17 of an actuator assembly 18 in close proximity with the disk surface for purposes of reading and/or writing data. As is known in the art, the actuator assembly 18 displaces the head 12 through radial traverses, as indicated by arrow 20 in Figure 1, to align the head 12 with a selected one of the disk tracks. A system controller 22 appropriately commands the actuator assembly to position the head 12 with a selected disk track.

While Figure 1 illustrates the general components of a typical disk drive 10 for use in a personal computer or the like, it will be understood that multiple memory storage disks 14 may be mounted for rotation in unison upon operation of the single spindle motor 16, and further that multiple heads 12 may be provided each on a separate arm 17 of a multi-armed actuator assembly 18 for positioning the various heads in close relation with respective upper and lower surfaces of the disks 14. In such a multi-disk drive construction, the several heads 12 are displaced in unison through radial traverses relative to the respective disks, with the system controller 22 designating one of the heads to be operational at any given time for the purposes of reading and/or writing data. The use of a multi-disk, multi-head disk drive is, of course, frequently desired due to the increased overall disk surface area and correspondingly increased data storage capacity.

In a typical multi-head disk drive, one disk surface comprises a servo surface bearing pre-recorded servo data arranged in closely spaced tracks. This servo data is monitored by the associated head 12 to provide appropriate feed-back signals through servo circuits (not shown) to the actuator assembly 18 for maintaining the head 12 in generally centered alignment with a specified servo track. Such alignment of the head 12 functions to position the remaining heads in a similar centered alignment with corresponding data tracks on their associated disk surfaces. In this regard, as viewed generally in Figure 2, one common arrangement for the servo data is a so-called quadrature servo track configuration wherein the servo data is recorded in patterns of repeating track groups of four across the radial span of the disk surface. Each track group thus defines four recognisably different track types which are conventionally designated as track types "0", "1", "2" and "3" (Figure 2).

The off-set nulling system according to the present invention operates in conjunction with the remaining components of the disk drive 10 to compensate position off-set errors attributable to a variety of so-called DC off-sets encountered during normal system operation. More particularly, notwithstanding the normal operation of the system controller 22 and the servo system, the actual position of the head 12 may be off-set relative to a centre line 23 of a designated track 24, as seen on enlarged scale in Figure 3. This positional off-set, normally identified as position off-set error, may be due to the combined effects of factors such as specific track length, cable bias, temperature, bearing friction, spindle motor rotational resistance, actuator assembly design, servo circuit errors, etc. The position off-set errors may be in either a forward (radially inward) direction or a reverse (radially outward) direction from the centre line 23 with a magnitude which frequently varies for different track types of a quadrature servo track configuration (Figure 2). The present invention provides a simple, automatic, cost efficient and reliable apparatus and method for identifying the direction and the magnitude of position off-set error, and for responding thereto to adjust the position of the head 12 to a substantially centered position aligned with the centre line 23.

Figure 4 is a graphic depiction of typical position off-set compensation required as a function of specific track number or address in the disk drive 10. That is, although the magnitude of off-set error will vary for different disk drives, different track types, and different operating conditions, the necessary compensation to re-align the head with a given centre line 23 normally increases rapidly and non-linearly over the first few tracks progressing in a radially inward direction from the outermost track, namely track "0". Subsequent to this initial and substantially linear range, the necessary position off-set compensation increases at a slower, more linear rate for the remainder of the tracks, with Figure 4 depicting this slower compensation increase between about tracks 60 and 1,000 for a disk having approximately 1,000 to 1,100 tracks across its radial span. The off-set nulling system according to the present invention functions in a calibration mode to identify the requisite off-set compensation by limited sampling of position off-set errors each time the disk drive and related computer system are powered up. Thereafter, during a normal operation mode, the nulling system utilises the sampled position off-set errors to apply · compensation to the head in accordance with the actual track address location of the head, and in a manner approximating the particular off-set compensation curve (e.g. Figure 4) for the specific track address.

The off-set nulling system utilises a micro-controller 25 responsive to detected position error signals to detect and compensate for DC off-sets for each track type. While various specific micro-controllers may be used, such as Model 86C91, available commercially from Zylog Corporation of Campbell, California, U.S.A., the micro-controller may be provided in any suitable form capable of programming to carry out the calibration mode and the normal operation mode, to be described.

More particularly, when the computer system is powered up, the system components are subjected to an initial checking and calibration sequence. The off-set nulling system functions in the calibration mode during this sequence to identify and compensate for position off-set errors for selected tracks at selected radially inner and radially outer regions of the disk 12, such as the dedicated servo surface in a multiple disk drive. When a quadrature servo track configuration is used, the system separately identifies and compensates for each track type near the radially inner and outer regions of the disk surface. The specific track numbers selected during the calibration mode may vary, although selection of tracks at or near opposite ends of the more linear region of the off-set compensation graph of Figure 4 are preferred for best results. For example, with a disk having a quadrature servo track arrangement, track 60 to 63 and tracks 1,000 to 1,003 (track types "0" to "3") could be selected for position off-set error identification and compensation during the calibration mode.

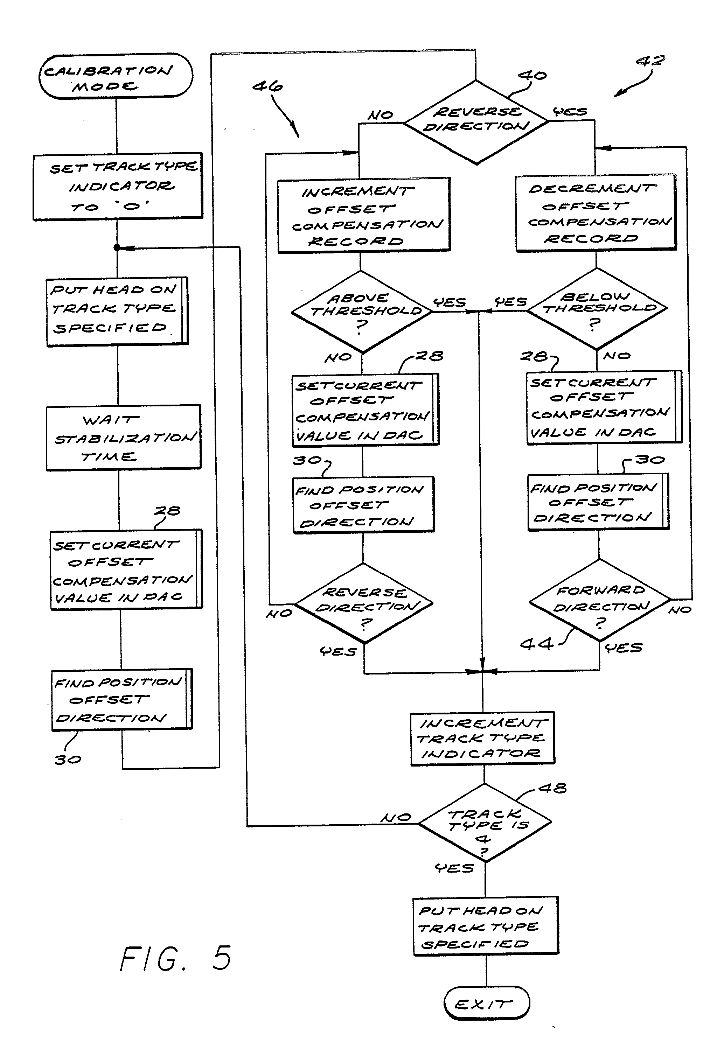

Figure 5 illustrates in flow chart form a process sequence programmed into the micro-controller 25 for position off-set error identification and compensation during the calibration mode. More particularly, when the computer is powered up, the heads 12 are displaced from a parked position located typically at a non-data landing zone 26 (Figure 1) adjacent the axis of disk rotation. A micro-controller program designated "calibration mode" (Figure 5) is initiated wherein a track type indicator register is re-set to track type "0". The program then enters a primary loop during which off-set compensation values and directions for all track types "0" to "3" are calibrated. The actuator assembly 18 is then initially instructed to align the servo head 12 over the specified track type "0" at a radially inner region of the disk, for example, at track number 1,000. After a brief waiting time to ensure stabilisation of circuit components, the micro-processor program activates two sub-routines 28, 30 in sequence for respectively identifying the head position off-set error and the off-set direction.

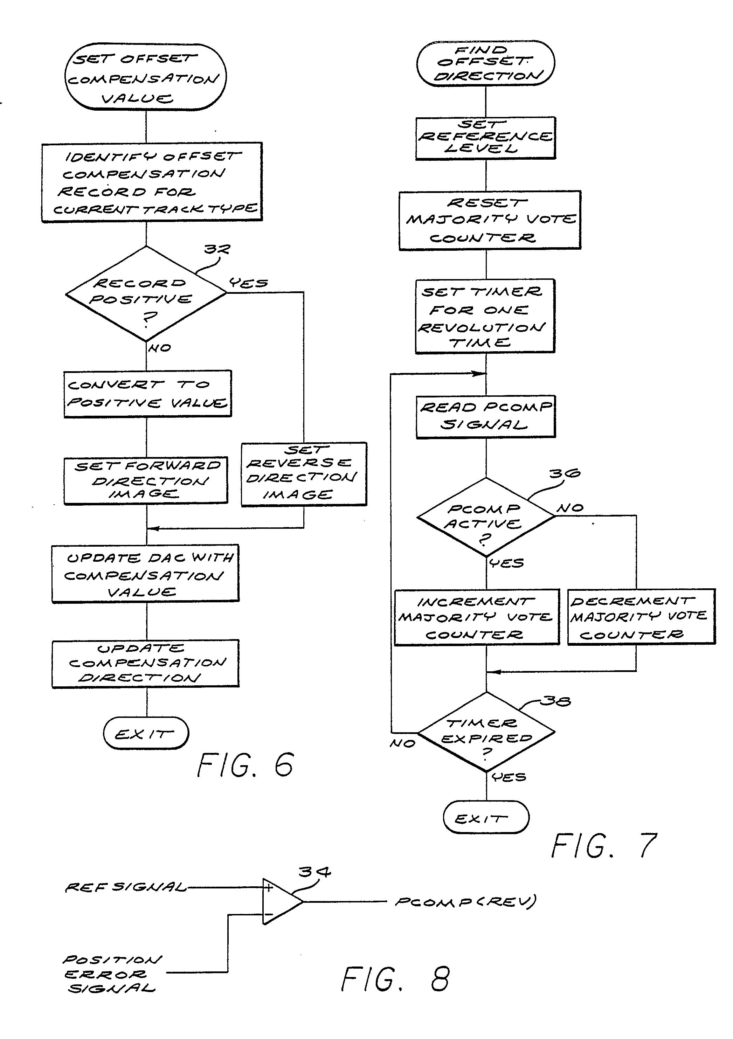

The sub-routine 28, shown in Figure 6, initially refers to the micro-controller memory to identify the off-set compensation record for the current track type, namely, track type "0", as stored from a preceding calibration mode procedure. The stored off-set compensation record is analysed at decision block 32 to determine its positive or negative sign value. A negative compensation record sign indicates a forward spacing for the head 12 in a radially inward direction relative to the designated track (Figure 3), whereas a positive sign reflects a reverse head spacing in a radially outward direction from the track centre line 23. When the off-set compensation record is positive, the sub-routine 28 sets the micro-processor memory to a reverse direction and then up-dates the compensation record into a system output device such as a digital-to-analog (DAC) converter. Alternatively, when the stored compensation record is negative, the micro-controller program converts the negative value to a positive sign and sets the system memory to a forward direction, after which the same system output device is up-dated with the stored compensation record. Following up-dating of the output device, the system hardware, namely, the actuator assembly 18 for displacing the head 12 in a forward or reverse direction, is appropriately commanded by the analog output to adjust head position based upon the stored record.

The sub-routine 30 (Figure 7) functions to determine the actual direction of current off-set error of the head 12, relative to the designated track, in respect of a prior value stored in the system memory. This directional sub-routine 30 initially sets a voltage level for a reference signal, as viewed schematically in Figure 8, with a position error signal obtained conventionally by monitoring head position relative to track cross over points in a quadrature servo track configuration. This comparison between the position error signal and the reference signal results in a comparator 34 (Figure 8) assuming an active state when the magnitude of the reference signal exceeds the position error signal to indicate a "reverse" head position relative to the centre line of the designated track. This reverse head position is referred to as output PCOMP in Figure 8.

The directional sub-routine 30 re-sets a majority vote counter and initialises a timer clock adapted for timing an interval of one revolution of the disk 14. When this occurs, the sub-routine reads the PCOMP output (Figure 8) to determine if the output of the comparator 34 is active. As noted above, an active state for the comparator 34 indicates a negative off-set of the head 12 in a radially outward direction with respect to the designated track centre line. At decision block 36, an inactive state for the comparator 34 results in decrementing the majority vote counter by a single digital count, whereupon a subsequent decision block 38 determines whether the single revolution time interval has expired. If time expiration has not occurred, the computer state (PCOMP signal) is read again and the counter subsequently decremented if the comparator output is still inactive.

Alternatively, when the output of the comparator 34 is active, the decision block 36 increments the majority vote counter by a single count and then re-reads the comparator output provided the timer interval has not expired. Upon expiration of the timed interval, the decision block 38 terminates the sub-routine 30 and returns to the main calibration mode program shown in Figure 5. The resultant count of the majority vote counter, positive or negative in sign, indicates the reverse or forward direction of the head 12 relative to the designated track.

The calibration mode program (Figure 5) includes a decision block 40 responsive to the forward or reverse direction of the head position off-set, as determined by the directional sub-routine 30. The block 40 responds to the off-set direction to initiate one of two sub-loops for determining the magnitude of position off-set error. More particularly, a reverse direction sub-loop 42 is responsive to a reverse direction position off-set initially to decrement the off-set compensation record stored in memory by a single count. If the resultant compensation record does not exceed a maximum threshold, i.e. the head is within a selected spacing from the track centre line, the once decremented compensation record is up-dated into the digital-to-analog converter output device to adjust head position by repeated operation of the position sub-routine 28. The off-set direction is then re-determined by operation of the direction sub-routine 30, whereupon decision block 44 determines if the head has transitioned from a reverse position to a forward position relative to the track centre line. If such transition has not occurred, the reverse direction sub-loop 42 is repeated to reduce further the reverse direction off-set by digitally decrementing the compensation record one count at a time until transition occurs. When such transition to the forward direction position occurs, the sub-loop 42 is excited.

Similarly, in the event a forward head position off-set is identified by the decision block 40, a forward direction sub-loop 46 is entered for displacing the head in digital increments until transition to a reverse direction is achieved. More particularly, as a first step, the stored off-set compensation record is incremented by a single digit. If the head is within a pre-determined maximum range from the track centre line, the position off-set and directional sub-routines 28 and 30 operate in sequence to up-date the output device for re-adjusting head position through a single incremental step, and then to re-determine forward or reverse head position relative to the track centre line. If transition to the reverse direction has not occurred, the sub-loop 46 is repeated. Alternatively, when such transition to the reverse direction occurs, the sub-loop 46 is terminated.

Regardless of the sub-loop path 42 or 46, the position of the head 12 relative to the track centre line is adjusted incrementally until an appropriate transition to the opposite direction occurs. The final head position, therefore, is within one incremental step from the track centre line, with this final head position being substantially in centered alignment with the track. Alternatively, if the head spacing exceeds the threshold limit, the appropriate sub-loop is interrupted and excited as an error condition.

Upon exciting the sub-loops 42 or 46, the track type indicator is incremented to identify the subsequent track type. Accordingly, the first time through the primary loop, the compensation value program substantially aligns the head 12 with track type "0". Successive loop passages are effective to align the head with track types "1", "2" and "3", thereby aligning the head with all four track types in a quadrature servo track configuration at locations near the inner diameter of the disk 14. When the track type indicator reads "4", decision block 48 interrupts the primary loop whereupon the micro-processor program re-positions the head at track type "0" for confirmation of alignment.

The micro-processor program then positions the head 12 over a track type "0" at a radially outer region of the disk 14, such as at about track 60. The program loop of Figure 5 is then repeated for all four track types, thereby aligning the head 12 with and appropriately storing compensation records for all four track types.

The above described calibration mode thus identifies and compensates for position off-set errors for all four track types at locations generally at radially inner and radially outer regions of the disk. For definition purposes, the compensation values obtained for the outer tracks are identified as "base" values for each track type, and the difference between the base values and the compensation values obtained for the same track types at radially inner regions of the disk are referred to as "difference" values. Moreover, the tracks across the radial span of the disk are divided into zone addresses of uniform track size to permit subsequent interpolation of the base and difference compensation values during a normal operation mode of the disk drive. In one working embodiment of the present invention, a disk surface having about 1,100 tracks was divided into a total of nine zones identified as zone numbers 0 to 8, and progressing in number in a radially inward direction from the disk periphery.

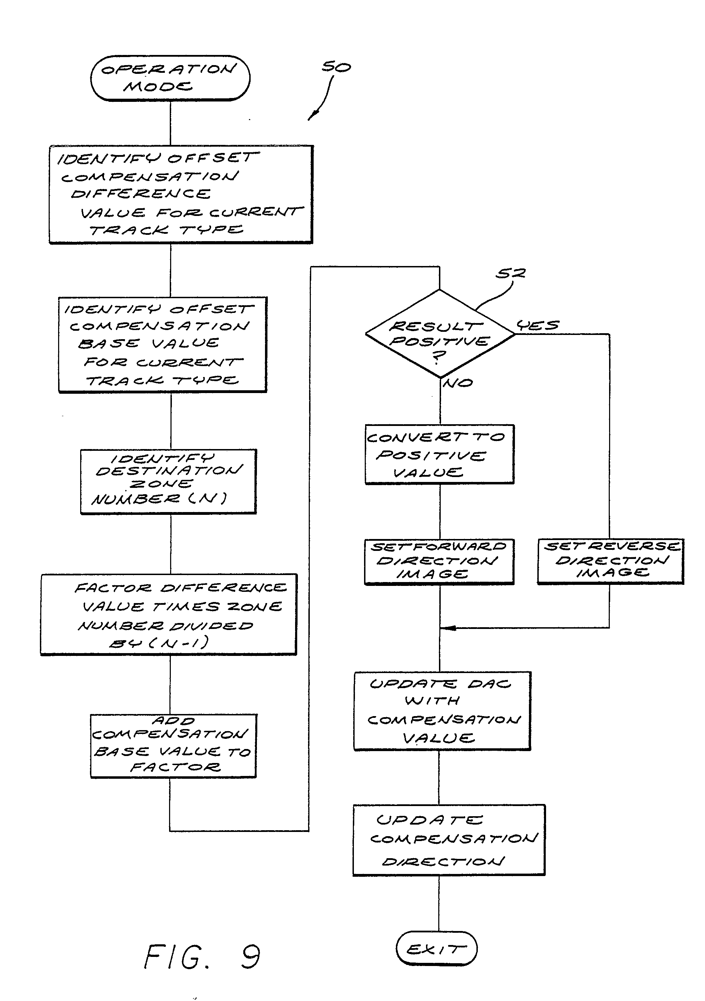

In a normal operation mode, an "operation mode" program 50, as viewed in Figure 9 and incorporated into the micro-controller, functions automatically at the conclusion of each track seek step to apply an interpolated off-set compensation value to the head 12 for purposes of nulling anticipated head position off-set errors. More specifically, when the system controller 22 (Figure 1) commands the actuator assembly 18 to displace the head 12 into alignment with a designated track on the disk surface, the micro-controller 12 responds to the destination track address to apply an off-set compensation derived from the previously determined base and difference off-set compensation values for the particular track type.

The off-set compensation program is shown in flow chart form in Figure 9. As an initial step, the program identifies from memory the off-set compensation difference value for the particular track type to be aligned with the head 12 at the conclusion of a seek step. The program then identifies the off-set compensation base value for that track type, in addition to the destination address by zone number "n". In this regard, the number of zone addresses is subject to variation, with increased zone addresses providing improved overall interpolative resolution with corresponding increased computation complexity.

With the above described identified values, the off-set compensation program factors or muliplies the compensation difference value times the zone number of the destination track, and divides the product by the total number of zones minus one (n-1). This factor is then added to the compensation base value. Decision block 52 determines whether the calculated off-set compensation value is positive or negative. If the result is positive, the program sets a reverse direction and appropriately updates the compensation value in the output device for adjusting head position to null position off-set error. Alternatively, if the result if negative, the result is converted to a positive value and the forward direction is re-set. The output device is then appropriately up-dated to in turn up-date and re-adjust the position of the head.

Accordingly, the off-set nulling system of the present invention provides a relatively simple and automated system and method for identifying head position off-set errors at selected positions across the radial span of a disk. These identified off-set errors are stored and interpolated for application at the conclusion of each seek step during normal disk drive operation for substantially nulling position off-set errors. Importantly, the system automatically re-calibrates itself each time the computer is powered up to accommodate the most current variables impacting the presence and magnitude of position off-set errors.

## Claims

1. An off-set nulling system for detecting and compensating for position off-set error of a head (12) relative to a centre line (23) of a designated track (24) on the surface of a memory storage disk (14) having a plurality of generally concentric tracks, said head being movable through a seek step during a normal operation mode for alignment with the designated track (24), said nulling system being characterised by comprising: calibration mode means for detecting and compensating for position off-set errors during a calibration mode at selected tracks (24) located respectively at radially inner and radially outer regions of the disk surface; an operation mode means responsive to the specific location of the designated track (24) on the disk (14) and the position off-set errors detected by said calibration means for interpolating said position off-set errors to apply an interpolated off-set to the head for compensation of position off-set error at the designated track.

2. An off-set nulling system as claimed in claim 1, characterised in that said calibration mode means includes means for detecting the direction of position off-set error when the head is generally aligned with one of said selected tracks (24), means for displacing said head (12) incrementally towards a position eliminating the position off-set error and re-determining means for re-determining the direction of the position off-set error at the conclusion of each increment of head displacement, the position off-set error being substantially eliminated when said re-determining means detects a change of direction in the position off-set error.

3. On off-set nulling system as claimed in claim 2, characterised in that said calibration mode means further includes record means for storing an off-set compensation signal for each of said selected tracks (24) during said calibration mode, and for applying said off-set compensation signal to the head (12) prior to detecting the direction of the position off-set error by said detecting means, and up-date means for up-dating said off-set compensation error signal in accordance with actual position off-set error during said calibration mode.

4. An off-set nulling system as claimed in claim 3, characterised in that said record means stores said off-set compensation signal for application to the head (12) during a subsequent calibration mode.

5. An off-set nulling system as claimed in any preceding claim, characterised in that the concentric tracks (24) on the disk surface comprise a quadrature track configuration including different track types (0 to 3) in repeating groups of four across the radial span of the disk surface, said calibration mode means, in operation, detecting and compensating for position off-set errors for a first group of all four track types located generally at a radially inner region of the disk surface, and for position off-set errors for a second group of all four track types located generally at a radially outer region of the disk surface, and said operation mode means, in operation, being responsive to the specific location and track type of the designated track (24) and the position off-set errors detected by said calibration mode means for that track type.

6. An off-set nulling system for detecting and compensating for position off-set error of a head (12) relative to a centre line (23) of a designated track (24) on the surface of a memory storage disk (14) having a plurality of generally concentric tracks, said head (12) being movable through a seek step during a normal operation mode for alignment with the designated track (24), said nulling system being characterised by comprising: calibration mode means for detecting and compensating for the position off-set errors during a calibration mode at at least two selected tracks (24) located at spaced positions across the radial span of the disk surface; and operation mode means responsive to the specific location of the designated track (24) on the disk (14) and the position off-set errors detected by said calibration means for interpolating said position off-set error to apply an interpolated off-set to the head (12) for compensation of position off-set error at the designated track (24).

7. An off-set nulling system for detecting and compensating for position off-set error of a head (12) relative to a centre line (23) of a designated track (24) on the surface of a memory storage disk (14) having a plurality of generally concentric tracks, said head being movable through a seek step during a normal operation mode for alignment with the designated track (24), said nulling system being characterised by comprising: calibration mode means including means for aligning the head (12) with at least one selected track (24) located generally at a radially inner region of the disk surface, means for detecting the direction of position off-set error, means for displacing the head in incremental steps towards a position substantially eliminating the position off-set error, and means for re-determining the direction of the position off-set error at the conclusion of each incremental step, the position off-set error being substantially eliminated when said re-determining means detects a change of direction of the position off-set error; and operation mode means responsive to the specific location of the designated track at the radially inner and outer regions thereof and the position off-set errors therefor detected by said calibration mode means, for interpolating said position off-set errors to apply an interpolated off-set to the head for compensation of position off-set error at the designated track.

8. An off-set nulling system as claimed in any preceding claim, characterised in that the disk surface is sub-divided into a selected number of track zones, said operation mode means including means for identifying the zone of said designated track, and for interpolating the position off-set errors detected during said calibration mode in accordance with the identified zone of the designated track to apply an interpolated off-set to the head.

9. An off-set nulling method for compensation of position off-set errors of a head (12) relative to a centre line (23) of a designated track (24) on the surface of a memory storage disk (14) having a plurality of generally concentric tracks, said method being characterised by comprising the steps of: detecting and compensating for position off-set errors during a calibration mode at selected tracks located respectively at radially inner and radially outer regions on the disk surface; displacing the head (12) through a seek step for general alignment with a designated track on the disk surface during a normal operation mode; identifying the specific location of the designated track (24) on the disk surface; interpolating the position off-set errors detected during the calibration mode in accordance with the location of the designated track to a obtain an interpolated off-set signal; and adjusting the position of the head (12) in accordance with the interpolated off-set signal.

10. A method as claimed in claim 9 characterised in that said detecting and compensating step during the calibration mode comprises detecting the direction of position off-set error when the head is generally aligned with one of said selected tracks, displacing said head incrementally towards a position eliminating the position off-set error and re-determining the direction of the position off-set error at the conclusion of each increment of head displacement, the position off-set error being substantially eliminated when the direction of the position off-set error changes.

11. A method as claimed in claim 10 characterised by including the steps of storing an off-set compensation signal for each of said selected tracks during said calibration mode, and applying the stored off-set compensation signal to the head prior to detecting the direction of the position off-set error and up-dating said off-set compensation error signal in accordance with actual position off-set error during said calibration mode.

12. A method as claimed in claim 11 characterised by including the step of storing the off-set compensation signal for application to the head during a subsequent calibration mode.

13. An off-set nulling method for compensation of position off-set errors of a head (12) relative to a centre line (23) of a designated track (24) on the surface of a memory storage disk (14) having a plurality of generally concentric tracks, said method being characterised by comprising the steps of: detecting and compensating for position off-set errors during a calibration mode at at least two selected tracks (24) located at spaced position across the radial span of the disk surface; displacing the head (12) through a seek step for general alignment with the designated track (24) on the disk surface during a normal operation mode; identifying the specific location of the designated track (24) on the disk surface; interpolating the position off-set errors detected during the calibration mode in accordance with the location of the designated track to obtain an interpolated off-set signal; and adjusting the position of the head (12) in accordance with the interpolated off-set signal.

14. An off-set nulling method for compensation of position off-set errors of a head (12) relative to a centre line (23) of a designated track (24) on the surface of a memory storage disk (14) having a plurality of generally concentric tracks, said method being characterised by comprising the steps of: a calibration mode step including aligning the head with at least one selected track located generally at a radially inner region of the disk surface detecting the direction of position off-set error, displacing the head (12) in incremental steps towards a position substantially eliminating the position off-set error, re-determining the direction of the position off-set error at the conclusion of each incremental step, and halting said incremental stepping when change of direction in the position off-set error occurs; displacing the head (12) through a seek step for general alignment with a designated track (24) on the disk surface during a normal operation mode; identifying the specific location of the designated track on the disk surface; interpolating the position off-set errors detected during the calibration mode in accordance with the location of the designated track (24) to obtain an interpolated off-set signal; and adjusting the position of the head (12) in accordance with the interpolated off-set signal.

15. A method as claimed in any of claims 9 to 14 characterised in that the concentric tracks on the disk surface comprise a quadrature track configuration including different track types (0 to 3) in repeating groups of four across the radial span of the disk surface, said detecting and compensating step being repeated for a first group of all four tracks types located generally at a radially inner region of the disk surface, and for a second group of all four track types located generally at a radially outer region of the disk surface, and said interpolating step including responding to the specific location and track type of the designated track and the position off-set errors detected by said calibration mode means for that track type.

16. A method as claimed in any of claims 9 to 15 characterised in that said interpolating step comprises sub-dividing the disk surface into a selected number of track zones, identifying the zone and the track type of the designated track, and interpolating the position off-set errors for that track type as detected during said calibration mode in accordance with the identified zone.

FIG. 1

FIG. 2

FIG. 3

FIG. 4

FIG. 5

## FIG. 6

```
        SET OFFSET
       COMPENSATION
          VALUE
            │
            ▼
  ┌──────────────────┐
  │  IDENTIFY OFFSET │
  │   COMPENSATION   │
  │    RECORD FOR    │
  │ CURRENT TRACK TYPE│
  └──────────────────┘
            │
            ▼          32
        ╱────────╲
       ╱  RECORD  ╲  YES
      ╱  POSITIVE  ╲───────┐
      ╲     ?      ╱        │
       ╲          ╱         │
        ╲────────╱          │
            │ NO            │
            ▼               ▼
  ┌──────────────────┐  ┌──────────────┐
  │   CONVERT TO     │  │     SET      │
  │ POSITIVE VALUE   │  │   REVERSE    │
  └──────────────────┘  │  DIRECTION   │
            │           │    IMAGE     │
            ▼           └──────────────┘
  ┌──────────────────┐         │
  │  SET FORWARD     │         │
  │   DIRECTION      │         │
  │     IMAGE        │         │
  └──────────────────┘         │
            │◄──────────────────┘
            ▼
  ┌──────────────────┐
  │  UPDATE DAC WITH │
  │   COMPENSATION   │
  │     VALUE        │
  └──────────────────┘
            │
            ▼
  ┌──────────────────┐
  │     UPDATE       │
  │  COMPENSATION    │
  │   DIRECTION      │
  └──────────────────┘
            │
            ▼
         ( EXIT )
```

## FIG. 7

```
         FIND
        OFFSET
       DIRECTION
            │
            ▼
  ┌──────────────────┐
  │      SET         │
  │   REFERENCE      │
  │     LEVEL        │
  └──────────────────┘
            │
            ▼
  ┌──────────────────┐
  │     RESET        │
  │ MAJORITY VOTE    │
  │   COUNTER        │
  └──────────────────┘
            │
            ▼
  ┌──────────────────┐
  │   SET TIMER      │
  │   FOR ONE        │
  │  REVOLUTION      │
  │    TIME          │
  └──────────────────┘
            │
            ▼
  ┌──────────────────┐
  │   READ PCOMP     │
  │    SIGNAL        │
  └──────────────────┘
            │
            ▼          36
        ╱────────╲
       ╱  PCOMP   ╲  NO
      ╱  ACTIVE    ╲──────────────┐
      ╲     ?      ╱               │
       ╲          ╱                │
        ╲────────╱                 │
            │ YES                  │
            ▼                      ▼
  ┌──────────────────┐  ┌──────────────────┐
  │   INCREMENT      │  │   DECREMENT      │
  │ MAJORITY VOTE    │  │ MAJORITY VOTE    │
  │   COUNTER        │  │   COUNTER        │
  └──────────────────┘  └──────────────────┘
            │                      │
            │◄─────────────────────┘
            ▼          38
        ╱────────╲
  NO   ╱  TIMER   ╲
  ┌────╲ EXPIRED   ╱
  │     ╲    ?    ╱
  │      ╲       ╱
  │       ╲─────╱
  │          │ YES
  │          ▼
  │       ( EXIT )
  └──────────────►
```

## FIG. 8

```
  REF SIGNAL ─────────┐      34
                      │ +╲
                      │   ╲────── PCOMP (REV)
                      │   ╱
  POSITION ───────────┘ -╱
  ERROR
  SIGNAL
```

OPERATION
MODE

50

IDENTIFY OFFSET
COMPENSATION
DIFFERENCE
VALUE FOR CURRENT
TRACK TYPE

IDENTIFY OFFSET
COMPENSATION
BASE VALUE
FOR CURRENT
TRACK TYPE

IDENTIFY
DESTINATION
ZONE
NUMBER (N)

FACTOR DIFFERENCE
VALUE TIMES ZONE
NUMBER DIVIDED
BY (N-1)

ADD
COMPENSATION
BASE VALUE TO
FACTOR

52

RESULT
POSITIVE
?

YES

NO

CONVERT TO
POSITIVE
VALUE

SET FORWARD
DIRECTION
IMAGE

SET REVERSE
DIRECTION
IMAGE

UPDATE DAC
WITH
COMPENSATION
VALUE

UPDATE
COMPENSATION
DIRECTION

EXIT

FIG. 9